Europäisches Patentamt

(19) European Patent Office

Office européen des brevets

(11) Publication number: **0 113 731**
**B1**

# (12) EUROPEAN PATENT SPECIFICATION

(45) Date of publication of patent specification: **01.10.86**

(21) Application number: **83901880.1**

(22) Date of filing: **16.05.83**

(86) International application number:
**PCT/US83/00764**

(87) International publication number:
**WO 84/00357 02.02.84 Gazette 84/03**

(51) Int. Cl.⁴: **C 03 B 37/08, B 21 D 39/20,**
**B 30 B 5/02, B 21 D 22/10**

(54) **METHOD OF MAKING GLASS FIBER FORMING FEEDERS.**

(30) Priority: **15.07.82 US 398536**
**20.04.83 US 486777**

(43) Date of publication of application:
**25.07.84 Bulletin 84/30**

(45) Publication of the grant of the patent:
**01.10.86 Bulletin 86/40**

(84) Designated Contracting States:
**BE DE FR GB NL SE**

(56) References cited:
**WO-A-82/01510**
**GB-A- 853 630**
**US-A-3 523 148**
**US-A-3 979 810**
**US-A-4 343 636**

(73) Proprietor: **OWENS-CORNING FIBERGLAS CORPORATION**
**Fiberglas Tower 26**
**Toledo, Ohio 43659 (US)**

(72) Inventor: **BHATTI, Mohinder, Singh**
**214 Llanberis**
**Granville, OH 43023 (US)**

(74) Representative: **Warden, John Christopher et al**
**R.G.C. Jenkins & Co. 12-15, Fetter Lane**
**London EC4A 1PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention disclosed herein relates to the production of glass fibers and glass fiber forming feeders.

With the production of glass fiber forming feeders having an ever-increasing number of orifices or tips to supply the streams of molten material to be attenuated into filaments, the need for effective and efficient systems for attaching the orificed tips or elements in the apertures in the discharge wall has also increased. Previously, the individual projections or tips were welded to the discharge wall be conventional welding techniques, such a cold resistance welding, electron beam welding, laser welding and the like. In essence, each of these systems welded a single tip at a time. With fiber forming feeders having as many as 4,000 or more tips, the welding process can be quite time consuming. Further, there are other problems associated with the systems which are well known in the art.

WO82/01510 describes the production of a glass fiber feeder discharge member by the insertion of orifice elements in a laminated wall and the application of hot isostatic pressure to the orifice elements and the laminated wall. In addition to gas, a solid pressure transmitting medium may be used, e.g. powdered metal or silica which softens during the treatment. However HIP techniques involve high capital cost.

According to the invention there is provided a method for making an orificed discharge member for a glass fiber feeder comprising:

inserting orifice elements in apertures in a member;

sealing said elements and member within a coating of elastomeric material adapted to isostatically transmit pressure to said elements and member;

applying cold isostatic pressure to the sealed elements and member to mechanically seal the elements to the member; and, after removal of the coating,

heating the mechanically sealed elements and member to fuse the elements to the member to prevent the unwanted passage of molten glass between said elements and said member,

orifices to permit the passage of molten glass being completed in said orifice elements at any suitable stage.

Preferred embodiments of the above method are defined in dependent claims 2 to 5.

According to the invention there is also provided a method of making a textile fiber forming feeder (10) in which an orificed discharge member is made by the method according to any of claims 1 to 5 and arranged to constitute the floor (14) of the feeder.

Finally there is provided a method of making a rotary feeder (50) in which an orificed discharge member is made by the method according to any of claims 1 to 5 and arranged to constitute the discharge wall (54) of the feeder.

In the drawings:—

FIGURE 1 is a semi-schematic front elevational view of a glass textile type fiber forming system.

FIGURE 2 is a semi-schematic front elevational view of a glass wool or rotary fiber forming system.

FIGURE 3 is an enlarged cross-sectional view of the floor of the feeder shown in FIGURE 1 during production.

Embodiments of the invention are hereinafter described.

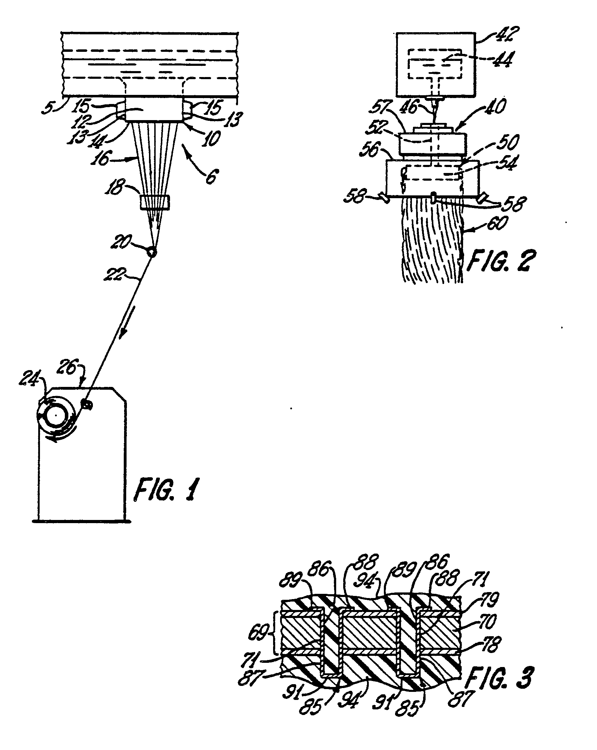

As shown in FIGURE 1, feeder 10, which is comprised of an orificed floor 14 and other sections such as containment or sidewalls 12 and end walls 13, is adpated to provide a plurality of streams of molten inorganic material, such as glass, through a plurality of orififed elements 85. Feeder 10, including floor 14, is electrically energized via terminals 15 joined to a suitable source of electrical energy (not shown) to heat the glass therein as is known in the art. As shown, terminals 15 are joined to end walls 13, but terminals 15 may extend outwardly from floor 14 if desired. The streams of molten glass can be attenuated into filaments 16 through the action of winder 26 of any other suitable means.

As is known in the art, size applicátor means 18 provides a coating or sizing material to the surface of the glass filaments which advance to gathering shoe or means 20 to be collected as an advancing strand or bundle 22. Strand 22 is then wound into package 24 upon a collet of winder 26 as is known in the art. Thus, FIGURE 1 schematically represents a "textile" fiber forming system.

As shown in FIGURE 2, rotary system 40 is comprised of a flow means or channel 42 having a body of molten inorganic material 44, such a glass, therein. A stream of molten glass 46 is supplied to rotary feeder or rotor 50 from channel 42, as is known in the art.

Rotor 50, which is adpated to be rotated at high speeds, is comprised of a quill 52 and a circumferential fiberizing or discharge wall 54 having a plurality of orificed elements 85 adapted to supply a plurality of streams of molten inorganic material to be fiberized. Such elements may be flush with the exterior surface of the wall or project outwardly therefrom.

In conjunction with rotor 50, a shroud 56 and circumferential blower or fluidic attenuation means 57 are adapted to fluidically assist in the attenuation of the streams of molten material into fibers or filaments 60. A binder material or coating may be applied to fiber 60 by means of binder applicators 58 as is known in the art.

As is shown in the drawings, member 69 of the fiberization or discharge walls 14 or 54 of the feeders 10 and 50, respectively, may be based upon a laminate comprised of a refractory metal core 70 having an oxygen impervious, precious metal sheath intimately bonded thereto by hot isostatic pressing (i.e., HIP). This laminate is disclosed in the aforementioned WO 82/01510. Or, member 69 may be comprised entirely of any suitable material, such as a platinum and rhodium alloy which, for example, is well known in the art.

Regarding the laminated member, such refractory metals are selected from the group of materials consisting of molybdenum (Mo), columbium (Cb), tungsten (W), rhenium (Re), tantalum (Ta), hafnium (Hf), titanium (Ti), chromium (Cr), zirconium (Zr), vanadium (V), and base alloys of such refractory metals. For example, an alloy of molybedenum, titanium and zirconium, known as TZM, has been shown to provide a superior laminated wall for a fiber forming feeder when clad with a precious metal alloy of platinum and rhodium.

Particularly, the precious metals for first layer 78, second layer 79 and/or elements 85 are selected from a group consisting of platinum (Pt), paladium (Pd), irridium (Ir), osium (Os), rhodium (Rh), ruthenium (Ru), and alloys based on such metals. Included in the platinum alloys are H alloy and J alloy which are alloys of platinum and rhodium of 90%/10% and 75%/25% composition, respectively. In essence, the laminate is comprised of a plurality of layers of material wherein one of said layers is a refractory metal, and another of said layers is an oxygen impervious, precious metal, said plurality of layers being intimately bonded together by the application of isostatic pressure and heat to form a unitary laminate. Or, the laminate may contain an intermediate diffusion barrier between the refractory metal layer and the precious metal layer. For example, the barrier layer may be a material selected from the group consisting of $Al_2O_3$, $MgAl_2O_4$, $MgCr_2O_4$, $TcB_2$, TiC and $MoSi_2$.

FIGURE 3 depicts a portion of a discharge wall or floor at a point during fabrication according to the principles of this invention. As such, elements or tips 85 are positioned in apertures 71 located in member 69. Then coating 94 of elastomeric material is applied to the assembled member 69 and elements 85 to hermetically seal the elements and member therewithin. The coating or material 94 must be capable of isostatically transmitting fluidic pressure to member 69 and elements 85, and the coating material must prevent the migration of the working fluid in the CIP pressing unit between the mating surfaces of member 69 and elements 85.

Then, isostatic pressure is applied to the coating assembly sufficient to mechanically seal or join the elements 85 to member 69. With the subsequent application of heat, the mechanically sealed elements and member are fused together to prevent the unwanted passage of molten glass between the elements 85 and member 69 used in a floor 14 or discharge wall 54.

Example I

A glass fiber forming feeder floor 14 was fabricated from a platinum-rhodium alloy plate or member 69 and a plurality of platinum-rhodium alloy elements or tips 85. As such, member 69 contained 800 apertures which each received an element 85. Each of the elements or tips 85 were comprised of a sleeve 87 and a flane 89. An orifice 86 within sleeve 87 extended from first end 88 at flange 89 to a second end 91 along sleeve 87. As shown in FIGURE 3, second end 91 was closed. However, it is to be understood that tips 85 may be supplied with an open second end 91 such that orifice 86 extends completely through element 85.

The elements 85 were inserted into aperture 71 of member 69 such that flange 89 was in abutting engagement with one side of member 69 and such that a portion of sleeve 87, including second end 91, extended beyond the opposite side of member 69.

The loose assembly of elements 85 and member 69 was then dipped in a liquid bath of polyvinylchloride (PVC) to coat the exposed surfaces of elements 85 and member 69 and to fill orifices 86 of element 85. After the application of the liquid coating, a slight vacuum was applied to assist in the complete filling of the orifices 86 with the elastomeric material. The PVC was then cured or solidified to seal elements 85 and member 69 against the migration of the working fluid in the pressing unit therebetween.

The coated assembly was then placed in the oil bath of a cold isostatic pressing (CIP) unit, and a pressure of about $1.03 \times 10^9$ N/m² (150,000 psi) was briefly exerted on the coated assembly to mechanically seal or join the elements to the member. Since cold isostatic pressure or pressing was employed, the operation was carried forth at approximately room temperature.

Subsequent to the application of isostatic pressure in the CIP unit, the elastomeric coating 94 was slit and removed from member 69 and elements 85. Then the sub-assembly, comprised of the mechanically sealed elements and member 69, was placed in a heating means or furnace and heated to a temperature of about 1200°C for about one hour to fuse the elements to the member to form the discharge wall such that, during subsequent operation as a fiber forming feeder, the molten glass is prevented from flowing between the elements and the member.

The second ends 91 of elements 85 may then be machined to open orifice 86, if necessary, and sidewalls, and the like, normally associated with fiber forming feeders, are joined to the discharge wall to form a fiber forming feeder.

If the orifices 86 are not completely filled with the pressure transmitting media 94, the sleeves 87 may collapse upon the application of the pressure. Also, if the refractory metal laminate is employed, the fusion step should be performed in a vacuum, such as in a vacuum annealing furnace or in an inert atmosphere to prevent the possibility of oxidizing the core of the laminate prior to the fusion of the precious metal layers and the elements.

Alternatively, the intermediate heating step to fuse elements and member together is dispensed with. That is, member 69 having elements 85 CIP'ed thereto is jointed to the remaining sections, such as sidewalls 12 and end walls 13, to form feeder 10 in the absence of previously heating member 69 and elements 85 to fuse them together. Subsequently, feeder 10 is placed in "position", that is, in place to receive molten glass for attenuation into filaments (e.g., under a forehearth) and electrically energized to resistively heat feeder 10, including member 69 to fuse elements 85 thereto, in situ, at the start up of the feeder 10.

Example II

A glass floor 14 for a fiber forming feeder 10 was fabricated from a platinum-rhodium alloy plate or member 69 and a plurality of platinum-rhodium alloy elements or tips 85. As such, member 69 contained 800 apertures which each received an element 85. Each of the elements or tips 85 were comprised of a sleeve 87 and a flange 89. An orifice 86 within sleeve 87 extending from first end 88 and flange 89 to a second end 91 along sleeve 87.

The elements 85 were inserted into aperture 71 of member 69 such that flange 89 was in abutting engagement with one side member 69 and such that a portion of sleeve 87, including second end 91, extended beyond the opposite side of member 69.

The loose assembly of elements 85 and member 69 was then dipped in a liquid bath of polyvinylchloride (PVC) to coat the exposed surfaces of elements 85 and member 69 and to fill orifices 86 of element 85. After the application of the liquid coating, a slight vacuum was applied to assist in the complete filling of the orifices 86 with the elastomeric material. The PVC or pressure transmitting media was then cured or solidified to a pliable state to seal elements 85 and member 69 against the migration of the working fluid in the pressing unit therebetween.

The coated assembly was then placed in the oil bath of a cold isostatic pressing (CIP) unit, and a pressure of about $1.03 \times 10^9$ N/m² (150,000 psi) was exerted on the coated assembly to mechanically seal or join the elements to the member.

Subsequent to the application of isostatic pressure in the CIP unit, the elastomeric coating 94 was slit and removed from mechanically joined member 69 and elements 85. The second ends 91 of elements 85 were then machined to open orifice 86.

Then the sub-assembly, comprised of the mechanically sealed elements and member 69, was suitably jointed to sidewalls 12 and end walls 13 to form feeder 10. Subsequently, feeder 10 was positioned beneath a supply of molten glass, such as a forehearth or foremelter, as is known in the art. That is, feeder 10 is installed in the refractory 5 of a fiber forming position 6 so that molten glass is supplied to feeder 10 for attenuation into filament 16. Terminals 15 are joined as suitable source of electrical energy and then power is supplied to gradually raise the temperature of feeder 10 to the desired level as is done with conventionally fabricated feeders.

Preferably, the material of tips or element 85 has a coefficient of expansion greater than that of member 69. As such, upon heating or energization of feeder 10, sleeves 87 of elements 85 tend to expand more than the internal diameter of the apertures 71 of member 69 such that sleeve 87 is even more intimately pressed into the portion of member 69 to finding aperture 71. The elements 85 were comprised of H alloy while the member 69 was comprised of J alloy. Upon electrically energizing feeder 10, and thus member 69, the members 85 are fused to member 69 at flange 89 and sleeve 87.

If member 69 is comprised of a laminate having a refractory metal core as disclosed herein, feeder 10 is preferably surrounded in a non-oxidising gas, such as nitrogen, to prevent the oxygen containing atmosphere from oxidizing the refractory metal core prior to the fusion of the precious metal element 85 to the precious metal layers 78 and 79.

Although in the foregoing examples the member 69 was completely encased within the pressure transmitting coating 94, it is only necessary that the elements 85 and that portion of member 69 associated therewith be hermetically sealed by the coating. That is, other portions of member 69 may be left uncoated.

The coating material should not be too fluid or pliable. That is, the coating 94 should be sufficiently viscous to prevent the flow of the coating between the elements 85 and member 69 which may prevent the effective mechanical attachment of elements 85 to member 69.

According to the foregoing procedures, if a tip 85, is shown in FIGURE 3, is employed, the flange 89 will be fused to one surface of member 69 and sleeve 87 will be fused to the portion of member 69 defining the apertures 71 associated therewith. Further, if the refractory metal/precious metal laminate is employed as member 69, the sleeve 87 of element 85 will fuse to core 70 and layers 78 and 79 to seal the refractory metal within a protective layer of oxygen impervious, precious metal to prevent the oxidation of the refractory metal at elevated temperatures.

Also, it is to be understood that element 85 may be of any suitable shape, and, in particular, flange 89 may be dispensed with and/or the length of sleeve 87 may also be substantially equal to the thickness of member 69 to provide tipless orifice plate having orifices lined with a suitable material fused to the member 69.

To provide an effective mechanical seal between the elements and member in the isostatic pressing step, it is preferred that the isostatic pressure applied be greater than or equal to the yield point of the material of the elements 85 at the temperature employed for the pressing step.

With respect to the in-situ fusing of elements 85 to discharge wall 54 for a rotor 50, the "energization" to fuse can occur when the high temperature gaseous blast from burner/blower 57 heats wall 54 and elements 85 at initial start up.

**Claims**

1. A method of making an orificed discharge member (14; 54) for a glass fiber feeder (10; 50) comprising:

inserting orifice elements (85) in apertures (71) in a member (69);

sealing said elements and member within a coating (94) of elastomeric material adapted to isostatically transmit pressure to said elements and member;

applying cold isostatic pressure to the sealed elements and member to mechanically seal the elements to the member; and, after removal of the coating,

heating the mechanically sealed elements and member to fuse the elements to the member to prevent the unwanted passage of molten glass between said elements and said member,

orifices to permit the passage of molten glass being completed in said orifice elements at any suitable stage.

2. A method according to claim 1 wherein the member (14; 54) is heated before further assembly of the feeder (10; 50).

3. A method according to claim 1 wherein the heating is carried out after assembly of the feeder (10; 50).

4. A method according to any preceding claim wherein the isostatic pressure is applied approximately at room temperature and the pressure is greater than or equal to the yield point of the material of the elements (85) at such temperature.

5. A method according to any preceding claim wherein the heating is carried out in a non-oxidising atmosphere.

6. A method of making a textile fiber forming feeder (10) in which an orificed discharge member is made by the method according to any preceding claim and arranged to constitute the floor (14) of the feeder.

7. A method of making a rotary feeder (50) in which an orificed discharge member is made by the method according to any of claims 1 to 5 and arranged to constitute the discharge wall (54) of the feeder.

**Patentansprüche**

1. Ein Verfahren zum Herstellen eines mit Öffnungen versehenen Ausströmgliedes (14; 54) für eine Glasfaser-Zuführvorrichtung (10; 50) umfassend: Einsetzen von Öffnungselementen (85) in Löcher (71) in einem Glied (69);

abdichten der Elemente und des Gliedes in einem Überzug (94) aus elastomerem Material, welches befähigt ist, isostatische Druck auf die Elemente und das Glied zu übertragen;

anlegen eines kalten isostatischen Druckes an die abgedichteten Elemente und das Glied, um die Elemente mit dem Glied mechanisch zu versiegeln; und nach Entfernung des Überzugs

erhitzen der mechanisch versiegelten Elemente und des Gliedes um die Elemente mit dem Glied zu verschmelzen, so daß ein unerwünschter Durchtritt von geschmolzenem Glas zwischen den Elementen und dem Glied verhindert ist,

wobei Öffnungen, die den Durchtritt geschmolzenen Glases gestatten, in irgendeinem passenden Stadium in den Öffnungselementen vervollständigt werden.

2. Ein Verfahren nach Anspruch 1, bei dem das Glied (14; 54) vor dem weitern Zusammenbau der Zuführvorrichtung (10; 50) erhitzt wird.

3. Ein Verfahren nach Anspruch 1, bei dem die Erhitzung nach dem Zusammenbau der Zuführvorrichtung (10; 50) ausgeführt wird.

4. Ein Verfahren nach einem der voranstehenden Ansprüche, bei dem der isostatische Druck etwa bei Raumtemperature angelegt wird, und der Druck größer oder gleich der Fließgrenze der Materials der Elemente (85) bei einer solchen Temperatur ist.

5. Ein Verfahren nach einem der voranstehenden Ansprüche, bei dem die Erhitzung in einer nicht oxidierenden Atmosphäre ausgeführt wird.

6. Ein Verfahren zum Herstellen einer Textilfaser erzeugenden Zuführvorrichtung (10), bei der ein mit Öffnungen versehenes Ausströmglied durch das Verfahren nach einem der voranstehenden Ansprüche hergestellt und so angeordnet wird, daß es den Boden (14) der Zuführvorrichtung bildet.

7. Ein Verfahren zum Herstellen einer umlaufenden Zuführvorrichtung (50), bei dem ein mit Öffnungen versehenes Ausströmglied durch das Verfahren nach einem der Ansprüche 1 bis 5 hergestellt und so angeordnet wird, daß es die Ausströmwand (54) der Zuführvorrichtung bildet.

**Revendications**

1. Procédé de fabrication d'un organe distributeur perforé (14; 54) pour un dispositif d'alimentation (10; 50) formant des fibres de verre ce procédé consistant:

à insérer des éléments à orifice (85) dans des ouvertures (71) ménagées dans un organe (69);

à noyer lesdits éléments et ledit organe à l'intérieur d'un revêtement (94) en matériau élastomère apte à transmettre, de façon isostatique, une pression auxdits élémetns et audit organe;

à appliquer à froid une pression isostatique auxdits éléments et audit organe noyés, pour sceller mécaniquement les éléments à l'organe; et après enlèvement du revêtement,

à chauffer les éléments et l'organe scellés mécaniquement entre eux, pour réaliser une fusion entre les éléments et l'organe, en vue d'empêcher un passage non désiré de verre fondu entre lesdits éléments et ledit organe, des orifices, destinés à permettre le passage de verre fondu, étant pratiqués dans lesdits éléments à orifice à n'importe quelle étape.

2. Procédé selon la revendication 1, selon lequel l'organe (14; 54) est chauffé avant l'assemblage ultérieur du dispositif d'alimentation (10; 50).

3. Procédé selon la revendication 1, selon lequel le chauffage est effectué après l'assemblage du dispositif d'alimentation (10; 50).

4. Procédé selon l'une quelconque des revendications précédentes, selon lequel la pression isostatique est appliquée approximativement à la température ambiante et la pression est supérieure ou ègale au point d'écoulement, à cette température, du matériau constitutif des éléments (85).

5. Procédé selon l'une quelconque des revendications précédentes, selon lequel le chauffage est effectué dans une atmosphère non-oxydante.

6. Procédé de fabrication d'un dispositif d'alimentation (10) formant des fibres textiles, selon lequel un organe distributeur perforé est confectionné par mise en oeuvre du procédé conforme à l'une quelconque des revendications précédentes et est positionné de façon à constituer le fond (14) du dispositif d'alimentation.

7. Procédé de fabrication d'un dispositif d'alimentation rotatif (50), selon lequel un organe distributeur perforé est confectionné par mise en oeuvre du procédé conforme à l'une quelconque des revendications 1 à 5 et est positionné de façon à constituer la paroi de distribution (54) du dispositif d'alimentation.

FIG. 1

FIG. 2

FIG. 3